(19) Europäisches Patentamt
European Patent Office
Office européen des brevets

(11) **EP 4 182 382 B1**

(12) **EUROPEAN PATENT SPECIFICATION**

(45) Date of publication and mention of the grant of the patent:
**22.05.2024 Bulletin 2024/21**

(21) Application number: **21737058.4**

(22) Date of filing: **28.06.2021**

(51) International Patent Classification (IPC):
***C08J 5/10*** *(2006.01)* ***B29B 15/12*** *(2006.01)*
***B29C 70/50*** *(2006.01)* ***B29C 64/118*** *(2017.01)*
***B33Y 10/00*** *(2015.01)* ***B33Y 70/00*** *(2020.01)*

(52) Cooperative Patent Classification (CPC):
**C08J 5/10; B29B 15/12; B29C 64/118; B29C 70/003; B29C 70/50; B33Y 10/00; B33Y 70/00;** C08J 2365/00; C08J 2371/00

(86) International application number:
**PCT/EP2021/067678**

(87) International publication number:
**WO 2022/012908 (20.01.2022 Gazette 2022/03)**

(54) **PROCESS FOR PREPARING A CONTINUOUS FIBER FILAMENT, CONTINUOUS FIBER FILAMENT AND USE THEREOF**

VERFAHREN ZUR HERSTELLUNG EINES ENDLOSFASERFILAMENTS, ENDLOSFASERFILAMENT UND DESSEN VERWENDUNG

PROCÉDÉ DE PRÉPARATION D'UN FILAMENT À FIBRES CONTINUES, FILAMENT À FIBRES CONTINUES ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2020 US 202063053561 P**
**14.09.2020 EP 20196081**

(43) Date of publication of application:
**24.05.2023 Bulletin 2023/21**

(73) Proprietor: **Solvay Specialty Polymers USA, LLC**
**Alpharetta, Georgia 30005-3914 (US)**

(72) Inventors:
- **HAMMONDS, Ryan**
**Atlanta, GA 30360 (US)**
- **CHEN, Nan**
**Cumming, GA 30041 (US)**

(74) Representative: **Senninger, Thierry**
**Solvay SA**
**Intellectual Assets Management**
**Rue de Ransbeek 310**
**1120 Brussels (BE)**

(56) References cited:
**WO-A1-2019/042949** **US-A- 4 894 105**
**US-A1- 2020 009 785**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 182 382 B1

## Description

### Technical Field

The present disclosure relates to a process for preparing a continuous fiber filament based on a) the spreading of the fiber tow, b) the impregnation of a fiber tow in an liquid medium, comprising polymer powder particles of a certain size, an aqueous solvent and at least one surfactant selected from the group consisting of alkylphenoxy poly(ethyleneoxy) ethanol surfactants, c) the heating of the impregnated fiber above the melting temperature of the polymer and d) a step consisting in calendering the filaments using a die of cylindrical geometry. The present invention also relates to continuous fiber filament obtained from such process and to the use of the filaments for preparing three-dimensional objects.

### Background Art

The manufacture of a semi-finished product, which consists in coating reinforcement fibers by the thermoplastic matrix, may be carried out by different methods, depending on the manner in which the polymer material of the matrix is used. One of these methods is the method by dispersion, where the polymer intended to form the thermoplastic matrix is dispersed in the form of a powder in a solvent. More precisely, the method by dispersion consists in a) circulating the reinforcement fibers in an impregnation bath comprising the thermoplastic polymer dispersed in the solvent; b) removing the solvent by drying the fibers; c) heating the fibers above the melting temperature of the polymer to favour the adherence of said polymer on the fibers and to confer cohesion to the material; and d) calendering the fibers thereby coated with polymer to give to the product the desired shape and dimensions.

For environmental reasons, but also for health and safety reasons, the solvent, which is used for the impregnation bath, is preferably water. Given the hydrophobic nature of most polymers, it is necessary to add to the impregnation bath surface active agents (or surfactants), generally in low quantity, the role of which is to stabilise the dispersion of the thermoplastic polymer in aqueous phase.

WO 2018/185440 (Arkema) describes a method for preparing a semi-finished product comprising a PAEK-based resin and reinforcing fibers, comprising the steps of: a. preparing a dispersion comprising a PAEK-based resin in powder form dispersed in an aqueous phase comprising a surfactant; b. bringing the reinforcing fibers into contact with said aqueous dispersion; c. drying the fibers impregnated with the dispersion; and d. heating the impregnated fibers to a temperature sufficient to melt the resin, so as to form a semi-product, characterised in that the surfactant is a thermally stable surfactant which comprises a phosphoric, phosphate or sulfonate moieties.

WO 2019/053379A1 (Arkema) relates to a method for producing a semi-finished product comprising a resin based on PAEK and reinforcing fibers, comprising the steps of: a) producing a dispersion comprising a resin based on PAEK in a powdery form dispersed in an aqueous phase comprising at least one volatile organic compound and optionally a surfactant; b) bringing the reinforcing fibers into contact with said aqueous dispersion; c) drying the dispersion-impregnated fibers; and d) heating the impregnated fibers to a temperature that is high enough for the resin to melt, in such a way as to form a semi-finished product. More precisely, this document describes the use of volatile organic compounds miscible with water, in order to the amount of surfactants and / or thickening agents. Semi-finished products produced from this process however present a major drawback in that they contain a high volatiles content. This is undesirable for a certain number of applications, for example for the manufacture of 3D objects based on the use of continuous fiber filaments, because the printing process uses high temperature to melt the filament material. Indeed off-gassing of these volatiles during the process not only exposes the printer user to toxic volatiles, but also leads to the formation of defects in the printed parts.

WO 2019/042949 (D1) discloses a polymer composition comprising several polymers.

US 2020/009785 (D2) discloses a method for manufacturing three-dimensional (3D) objects using an additive manufacturing system wherein the part material comprises a combination of at least one poly(aryl ether ketone) polymer (PAEK) and at least one poly(aryl ether sulfone) (PAES) and a part material incorporating PAEK and PAES, for example in the form of filaments or spherical particles, for use in additive manufacturing systems to print 3D objects.

US 4,894,105 (D3) discloses a method for the production of an fibrous material suitable for the formation of a substantially void-free composite article comprising a plurality of adjoining substantially parallel reinforcing filaments in association with a matrix-forming thermoplastic polymer.

One object of the present invention is to prepare a continuous fiber filament to be used in an extrusion-based manufacturing system, which has a sufficient circularity and fiber distribution to lead to a 3D printed object of good quality. In an extrusion-based additive manufacturing system, a 3D part may be printed from a digital representation of the 3D part in a layer-by-layer manner by extruding and adjoining strips of a part material. The part material is extruded through an extrusion tip carried by a print head of the system, and is deposited as a sequence of roads on a platen in an x-y plane. The extruded part material fuses to previously deposited part material, and solidifies upon a drop in temperature. The position of the print head relative to the substrate is then incremented along a z-axis (perpendicular to the x-y plane),

and the process is then repeated to form a 3D part resembling the digital representation. An example of extrusion-based additive manufacturing system starting from filaments is called Fused Filament Fabrication (FFF). Circularity is a critical product feature in order to consistently and reliably know the volume of product being deposited during the printing process.

US 5,395,477 (Sandusky) relates to an apparatus and a method for providing a uniform, consolidated, unidirectional, continuous, filament-reinforced polymeric material. According to this document, when the semi-finished product is in the form of a filament, the use of die should be avoided because it causes filament tearing or bailing, due to the contact and friction between the carbon fiber and die inner surface causes carbon fiber damages.

The Applicant has identified a process to prepare semi-finished products in the form of filaments with a circular cross-section profile, to be used as feedstock material in additive manufacturing (AM) process, for example fused filament fabrication (FFF), such filaments being made of at least one poly(aryl ether ketone) (PAEK) polymer or copolymer, presenting an improved circularity and a well-dispersed fiber distribution across the filament, in comparison to filaments commercially available.

## Brief description of the figures

FIG. 1 is an optical microscopy image of the cross-section of a filament obtained from a process according to the invention with a PEEK polymer powder having a d50 of 10.9 μm.
FIG. 2 is an optical microscopy image of the cross-section of a comparative PEEK filament obtained with a polymer powder having a d50 above 20 μm.
FIG. 3 is a scanning electron microscopy (SEM) image of the cross-section of a commercial filament from Markforged Carbon Fiber CFF Spools, a product based on polyamide.

## Description of embodiments

According to the present invention, the continuous fiber filaments are prepared using a fiber line of wet impregnation. In this process, the fiber tow is impregnated in an aqueous polymer slurry, comprising polymer powder particles. The polymer particles attach to the fiber tow. The polymer particles are then melted onto the tow. A die, located right after the melting ovens, is used to remove excessive polymer, to give a smooth exterior to the composite filament, and to control the diameter of the filament.

The expression "filament" refers to a thread-like object formed of the polymeric matrix and at least one fiber tow. The filament of the present invention has a cylindrical geometry with an excellent circularity.

The continuous fiber filament prepared according to the process of the present invention comprises:

- a polymeric matrix comprising a polymeric component, optionally reinforcing fillers, and optionally at least one additive selected from the group consisting of colorants, lubricants, plasticizers, flame retardants, nucleating agents, flow enhancers and stabilizers,
  wherein the polymeric component comprises at least one poly(aryl ether ketone) (PAEK) polymer or copolymer, and optionally at least one additional polymer selected from the group consisting of a poly(aryl ether sulfone) (PAES), a poly(arylene sulfide) (PAS), a polyetherimide (PEI), an aromatic polyamideimide (PAI), a polyphtalamide (PPA), a poly(phenyl ether) (PPE), a semi-aromatic polyester and an aromatic polyesters (PE), and copolymers and mixtures of these polymers, and
- at least one fiber tow, which is embedded into the polymer matrix.

The process of the present invention is more precisely based on at least four steps as follows:

a) the spreading of the fiber tow,
b) the impregnation of a fiber tow in a liquid medium, comprising the polymeric component in the shape of PAEK (co)polymer powder particles, at least an aqueous solvent and from 0.01 to 3 wt.%, based on the total weight of the liquid medium, of at least one alkylphenoxy poly(ethyleneoxy) ethanol surfactants, wherein the (co)polymer powder particles have a d50 varying between 1 and 20 μm, as measured as measured by laser scattering in isopropanol on a Microtrac S3500 laser scattering analyzer, wherein the surfactant, preferably selected from the group consisting of alkylphenoxy poly(ethyleneoxy) ethanol surfactants,
c) the heating of the impregnated fiber of step b) above the melting temperature of the polymeric component, and
d) calendering the filament of step c) using at least one die of cylindrical geometry.

The applicant has found that the combination of these three steps as described above, as well as the selection of the combination of a specific surfactant with the PAEK (co)polymer powder of a specific particle size to be used to impregnated the fiber tow, allows the preparation of a continuous fiber filament having an improved circularity, and in which the fibers are well-distributed across the filament section, in comparison to commercially available continuous fiber filaments.

In the present application:

- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

Impregnation liquid medium

The invention thus relates to a process to prepare continuous fiber filament wherein a fiber tow is impregnated in a liquid medium (also called "bath"), which comprises a polymeric component in the shape of PAEK (co)polymer powder particles, at least an aqueous solvent and from 0.01 to 3 wt.%, based on the total weight of the liquid medium, of at least one surfactant which is characterized in that it is selected in the group consisting of alkylphenoxy poly(ethyleneoxy) ethanol surfactants.

The alkylphenoxy poly(ethyleneoxy) ethanol surfactants employed in the process of the present invention may preferably possess an HLB (Hydrophilic Lipophilic Balance) of from about 10 to 15. Suitable surfactants include, for example, the 500 and 600 series compounds sold under the tradename Igepal by the GAF Corporation, such as Igepal RC-520, RC-620, RC-630, CO-520, CO-530, CO-610, CO-630, CO-660, CO-720, CA-520, CA-620 and CA-630. Alkylphenoxy poly(ethyleneoxy) ethanol surfactants for use in the present invention even more preferably have an HLB of from about 12 to about 13, such as for example, Igepal RC-620, RC-630, CO-610, CO-630, CO-660, CA-620 and CA-630.

In accordance with the present invention, the surfactant is, preferably, present in the impregnation liquid medium in a proportion by weight ranging from 0.25 wt.% to 3 wt.% and, better still, from 0.50 wt.% to 2.5 wt.% based on the total weight of the liquid medium.

The aqueous solvent is preferably water. The water may be supplemented with anti-foaming agents (for example Surfinol® MD-20 from Evonik) and/or viscosity modifiers (for example acrylates, polypropylene glycol and polypropylene oxides).

Polymeric component

The polymeric matrix comprises at least the polymeric component, which can itself comprises at least one poly(aryl ether ketone) (PAEK) polymer or copolymer (thereafter "(co)polymer"). The polymeric component may also comprise one or several polymers selected from the group consisting of a further distinct poly(aryl ether ketone) (PAEK), a poly(aryl ether sulfone) (PAES), a poly(arylene sulfide) (PAS), a polyetherimide (PEI), an aromatic polyamideimide (PAI), a polyphtalamide (PPA), a poly(phenyl ether) (PPE), a semi-aromatic polyester and an aromatic polyesters (PE). The polymeric matrix may comprise several of these (co)polymers, for example two, three or four distinct polymers or copolymers in the list. The polymeric matrix may comprise two, three or four distinct PAEK (co)polymers.

The (co)polymer may be present in the polymeric matrix in a total amount of greater than 30 wt. %, greater than 35 wt. % by weight, greater than 40 wt. % or greater than 45 wt. %, based on the total weight of the polymeric matrix.

The method of the present disclosure preferably employs the polymeric component as the main element of the polymeric matrix.

The PAEK (co)polymer may be present in the polymeric matrix in a total amount of less than 99.95 wt.%, less than 99 wt.%, less than 95 wt.%, less than 90 wt.%, less than 80 wt. %, less than 70 wt. % or less than 60 wt. %, based on the total weight of the polymeric matrix.

The PAEK (co)polymer may for example be present in the composition (C) in an amount ranging between 20 and 98 wt. %, for example between 25 and 90 wt. %, between 30 and 40 wt. %, based on the total weight of the polymer matrix.

*Poly(aryl ether ketone) (PAEK)*

As used herein, a poly(aryl ether ketone) (PAEK) denotes any polymer comprising recurring units (RPAEK) comprising a Ar'-C(=O)-Ar* group, where Ar' and Ar*, equal to or different from each other, are aromatic groups, the mol. % being based on the total number of moles of recurring units in the polymer. The recurring units (RPAEK) are selected from the group consisting of units of formulas (J-A) to (J-D) below:

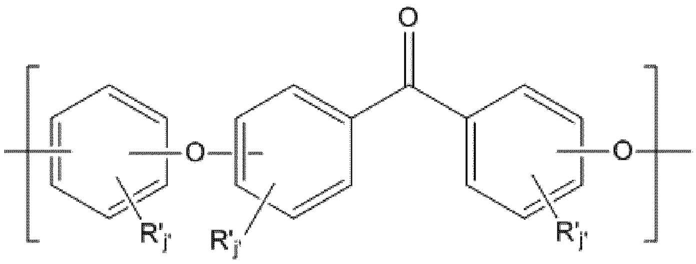
(J-A)

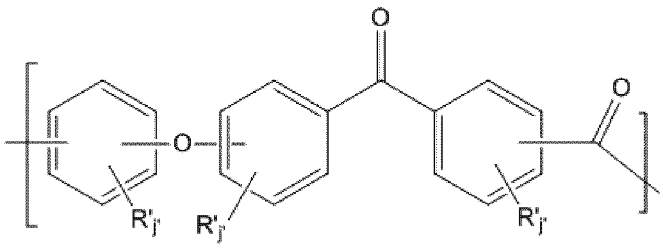
(J-B)

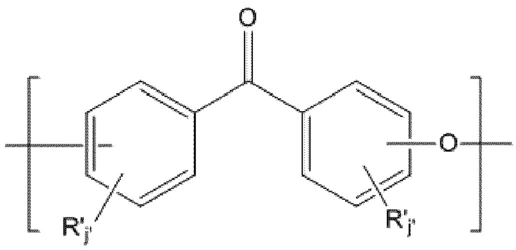
(J-C)

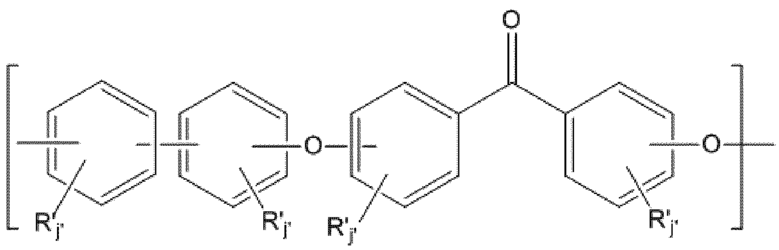
(J-D)

where

R' , at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
j' is independently zero or an integer ranging from 1 to 4.

In recurring unit ($R_{PAEK}$), the respective phenylene moieties may independently have 1,2-, 1,4- or 1,3-linkages to the other moieties different from R' in the recurring unit ($R_{PAEK}$). Preferably, the phenylene moieties have 1,3- or 1,4-linkages, more preferably they have a 1,4-linkage.
In recurring units ($R_{PAEK}$), j' is preferably at each location zero so that the phenylene moieties have no other substituents than those linking the main chain of the polymer.
According to an embodiment of the present invention, the PAEK polymer or copolymer is a poly(ether ether ketone) (PEEK) polymer or copolymer.

As used herein, a poly(ether ether ketone) (PEEK) denotes any polymer comprising recurring units ($R_{PEEK}$) of formula (J-A), based on the total number of moles of recurring units in the polymer:

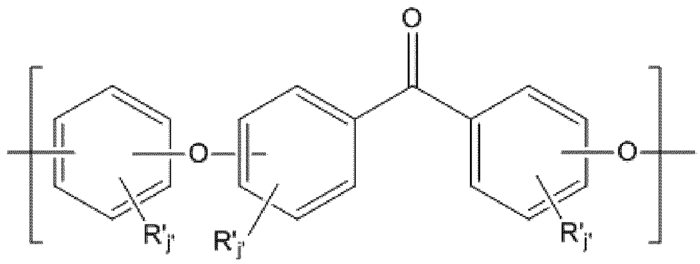

(J-A)

where

R' , at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
j' , for each R' , is independently zero or an integer ranging from 1 to 4 (for example 1, 2, 3 or 4).

According to formula (J-A), each aromatic cycle of the recurring unit ($R_{PEEK}$) may contain from 1 to 4 radical groups R'. When j' is 0, the corresponding aromatic cycle does not contain any radical group R'.
Each phenylene moiety of the recurring unit ($R_{PEEK}$) may, independently from one another, have a 1,2-, a 1,3- or a 1,4-linkage to the other phenylene moieties. According to an embodiment, each phenylene moiety of the recurring unit ($R_{PEEK}$), independently from one another, has a 1,3- or a 1,4-linkage to the other phenylene moieties. According to another embodiment yet, each phenylene moiety of the recurring unit ($R_{PEEK}$) has a 1,4-linkage to the other phenylene moieties.
According to an embodiment, R' is, at each location in formula (J-A) above, independently selected from the group consisting of a C1-C12 moiety, optionally comprising one or more than one heteroatoms; sulfonic acid and sulfonate groups; phosphonic acid and phosphonate groups; amine and quaternary ammonium groups.
According to an embodiment, j' is zero for each R'. In other words, according to this embodiment, the recurring units ($R_{PEEK}$) are according to formula (J'-A):

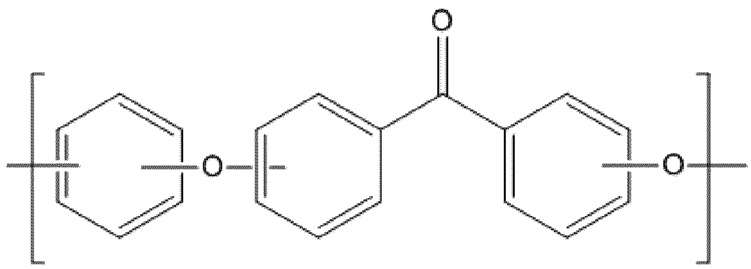

(J'-A).

According to another embodiment of the present disclosure, a poly(ether ether ketone) (PEEK) denotes any polymer comprising at least 10 mol. % of the recurring units are recurring units ($R_{PEEK}$) of formula (J"-A):

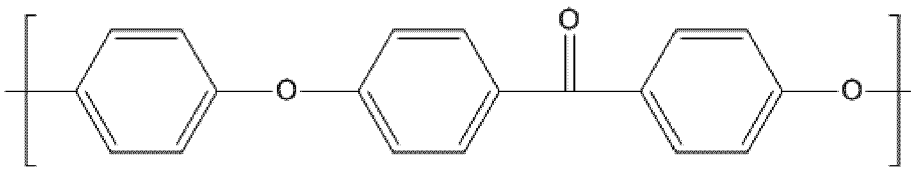

(J''-A)

the mol. % being based on the total number of moles of recurring units in the polymer.
According to an embodiment of the present disclosure, at least 10 mol. % (based on the total number of moles of recurring units in the polymer), at least 20 mol. %, at least 30 mol. %, at least 40 mol. %, at least 50 mol. %, at least

60 mol. %, at least 70 mol. %, at least 80 mol. %, at least 90 mol. %, at least 95 mol. %, at least 99 mol. % or all of the recurring units in the PEEK are recurring units ($R_{PEEK}$) of formulas (J-A), (J'-A) and/or (J"-A).

The PEEK polymer can therefore be a homopolymer or a copolymer. If the PEEK polymer is a copolymer, it can be a random, alternate or block copolymer.

When the PEEK is a copolymer, it can be made of recurring units ($R^*_{PEEK}$), different from and in addition to recurring units ($R_{PEEK}$), such as recurring units of formula (J-D):

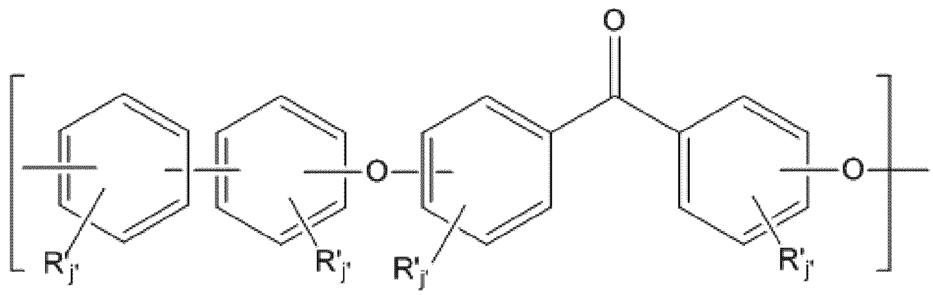

(J-D)

where

R', at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and

J', for each R', is independently zero or an integer ranging from 1 to 4.

According to formula (J-D), each aromatic cycle of the recurring unit ($R^*_{PEEK}$) may contain from 1 to 4 radical groups R'. When j' is 0, the corresponding aromatic cycle does not contain any radical group R'.

According to an embodiment, R' is, at each location in formula (J-D) above, independently selected from the group consisting of a C1-C12 moiety, optionally comprising one or more than one heteroatoms; sulfonic acid and sulfonate groups; phosphonic acid and phosphonate groups; amine and quaternary ammonium groups.

According to an embodiment, j' is zero for each R'. In other words, according to this embodiment, the recurring units ($R^*_{PEEK}$) are according to formula (J'-D):

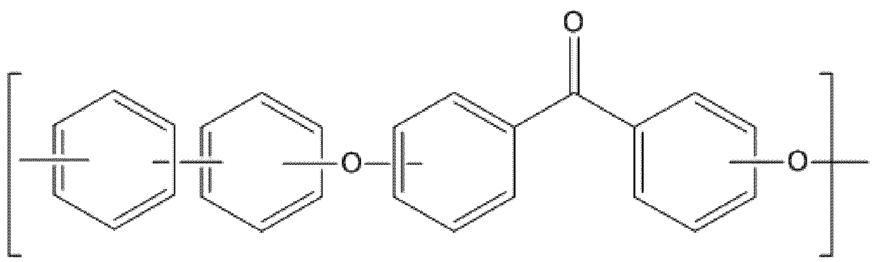

(J'-D).

According to another embodiment of the present disclosure, the recurring units ($R^*_{PEEK}$) are according to formula (J"-D):

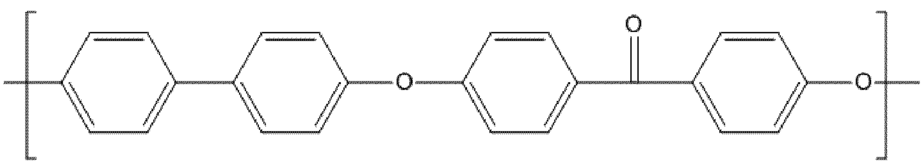

(J''-D).

According to an embodiment of the present disclosure, less than 90 mol. % (based on the total number of moles of recurring units in the polymer), less than 80 mol. %, less than 70 mol. %, less than 60 mol. %, less than 50 mol. %,

less than 40 mol. %, less than 30 mol. %, less than 20 mol. %, less than 10 mol. %, less than 5 mol. %, less than 1 mol. % or all of the recurring units in the PEEK are recurring units ($R^*_{PEEK}$) of formulas (J-D), (J'-D), and/or (J"-D).

According to an embodiment, the PEEK polymer is a PEEK-PEDEK copolymer. As used herein, a PEEK-PEDEK copolymer denotes a polymer comprising recurring units ($R_{PEEK}$) of formula (J-A), (J'-A) and/or (J"-A) and recurring units ($R^*_{PEEK}$) of formulas (J-D), (J'-D) or (J"-D) (also called hereby recurring units ($R_{PEDEK}$). The PEEK-PEDEK copolymer may include relative molar proportions of recurring units ($R_{PEEK}/R_{PEDEK}$) ranging from 95/5 to 5/95, from 90/10 to 10/90, or from 85/15 to 15/85. The sum of recurring units ($R_{PEEK}$) and ($R_{PEDEK}$) can for example represent at least 60 mol. %, 70 mol. %, 80 mol. %, 90 mol. %, 95 mol. %, 99 mol. %, of recurring units in the PEEK copolymer. The sum of recurring units ($R_{PEEK}$) and ($R_{PEDEK}$) can also represent 100 mol. %, of recurring units in the PEEK copolymer.

PEEK is commercially available as KetaSpire® PEEK from Solvay Specialty Polymers USA, LLC.

PEEK can be prepared by any method known in the art. It can for example result from the condensation of 4,4'-difluorobenzophenone and hydroquinone in presence of a base. The reaction of monomer units takes place through a nucleophilic aromatic substitution. The molecular weight (for example the weight average molecular weight Mw) can be controlled by adjusting the monomers molar ratio and measuring the yield of polymerisation (e.g. measure of the torque of the impeller that stirs the reaction mixture).

According to one embodiment of the present disclosure, the PEEK polymer has a weight average molecular weight (Mw) ranging from 65,000 to 105,000 g/mol, for example from 77,000 to 98,000 g/mol, from 79,000 to 96,000 g/mol, from 81,000 to 95,000 g/mol, or from 85,000 to 94,500 g/mol (as determined by gel permeation chromatography (GPC) using phenol and trichlorobenzene (1:1) at 160° C, with polystyrene standards).

According to an embodiment of the present invention, the PAEK polymer or copolymer is a poly(ether ketone ketone) (PEKK) copolymer.

The PEKK copolymer comprises at least one recurring unit ($R^M$) and at least one recurring unit ($R^P$), wherein recurring unit ($R^M$) is represented by formula (M):

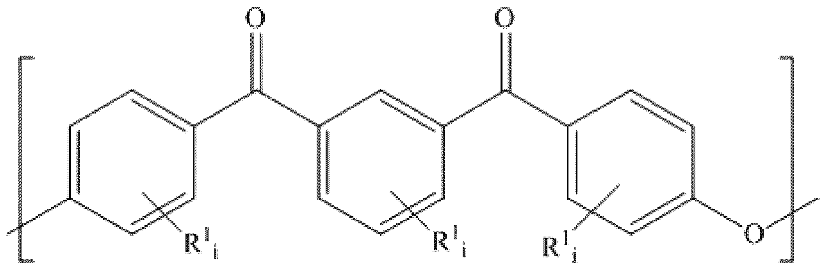

and recurring unit ($R^P$) is represented by formula (P):

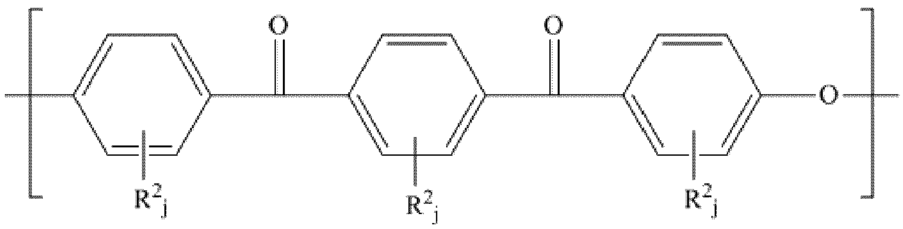

wherein:

- each $R^1$ and $R^2$, at each instance, is independently selected from the group consisting of an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and
- each i and j, at each instance, is an independently selected integers ranging from 0 to 4.

According to an embodiment, $R^1$ and $R^2$ are, at each location in formulas (M) and (P) above, independently selected from the group consisting of a C1-C12 moiety optionally comprising one or more than one heteroatoms; sulfonic acid and sulfonate groups; phosphonic acid and phosphonate groups; amine and quaternary ammonium groups.

According to another embodiment, i and j are zero for each $R^1$ and $R^2$ group. In other words, recurring units ($R^P$) and ($R^M$) are both unsubstituted. According to this embodiment, recurring units ($R^M$) and ($R^P$) are respectively

represented by formulas (M') and (P'):

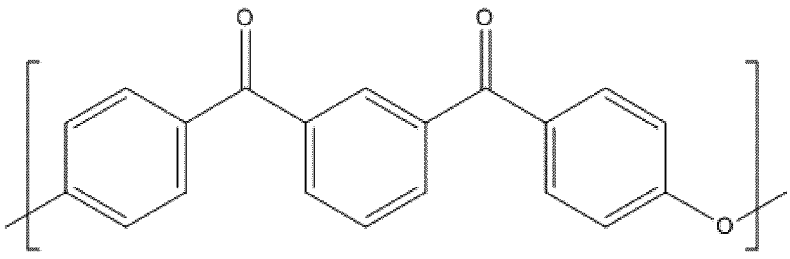

(M') and

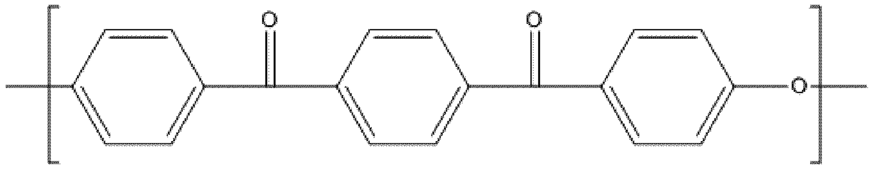

(P').

According to another embodiment, the PEKK polymer comprises at least one recurring unit ($R^M$), at least one recurring unit ($R^P$), and at least 50 mol. % of recurring units ($R^P$) and ($R^M$) of formulas (M), (P), (M') and/or (P'), the mol. % being based on the total number of moles in the polymer.

According to an embodiment of the present disclosure, at least 55 mol. %, at least 60 mol. %, at least 70 mol. %, at least 80 mol. %, at least 90 mol. %, at least 95 mol. %, at least 99 mol. % or all of the recurring units in the PEKK are recurring units ($R^P$) and ($R^M$) of formulas (M), (P), (M') and/or (P'), the mol. % being based on the total number of moles in the polymer.

The PEKK preferably has a ratio of recurring units ($R^P$)/($R^M$) ranging from 50/50 to 70/30, more preferably from 53/47 to 67/33 or from 55/45 to 65/35.

The PEKK may have one or two melting temperatures, Tm (° C). Melting temperatures are measured on the $1^{st}$ heat scan by differential scanning calorimetry (DSC) according to ASTM D3418. For sake of clarity, when reference is made, in the present application, to the melting temperature of the PEKK polymer, reference is in fact made to the highest Tm in case the PEKK has two Tm temperatures.

The synthesis of PEKK polymers is described in the literature and typically comprises a step of polycondensing the monomers in a solvent, in order to obtain the PEKK polymer, and a step of extracting the solvent and the salts. The polycondensation of the monomers may take place in the presence of a Lewis acid (electrophilic PEKK), or alternatively in the absence of a Lewis acid (nucleophilic PEKK) or takes place in the presence of an amount of Lewis acid of less than 2 wt.%, based on the total weight of the monomers, preferably less than 1 wt.%, more preferably less than 0.5 wt.%.

According to the present invention, the PAEK (co)polymer powder particles have a d50-value comprised between 1 μm and 20 μm, as measured by laser scattering in isopropanol, preferably between 2 μm and 19 μm, or between 3 μm and 18 μm or between 5 μm and 16 μm.

According to an embodiment of the present invention, the PAEK (co)polymer powder particles have a d90-value less than 30 μm, as measured by laser scattering in isopropanol. According to an embodiment, the PAEK (co)polymer powder particles have a d90-value less than 25 μm, as measured by laser scattering in isopropanol, preferably less than 20 μm or less 19 μm.

According to an embodiment of the present invention, the PAEK (co)polymer powder particles have a d10-value higher than 0.5 μm, as measured by laser scattering in isopropanol. According to an embodiment, the PAEK (co)polymer powder particles have a d10-value higher than 1 μm, as measured by laser scattering in isopropanol, preferably higher than 2 μm or higher than 3 μm.

According to an embodiment of the present invention, the PAEK (co)polymer powder particles have a d99-value less than 50 μm, as measured by laser scattering in isopropanol. According to an embodiment, the PAEK (co)polymer powder particles have has a d99-value less than 45 μm, as measured by laser scattering in isopropanol, preferably less than 40 μm or less 35 μm.

The PAEK (co)polymer powder particles having such particle size distribution can be prepared from a coarse powder by grinding. The coarse granulate can for example be ground in a pinned disk mill, a jet mill / fluidized jet mil with classifier, an impact mill plus classifier, a pin/pin-beater mill or a wet grinding mill, or a combination of those equipment. The coarse powder can be cooled before being ground to a temperature below the temperature at which the material becomes brittle, for example below 25°C before being ground. Cooling can for example take place by means of liquid

nitrogen or dry ice. The ground powder can be separated, preferably in an air separator or classifier, to obtain a predetermined fraction spectrum.

Reinforcing agents

A large selection of reinforcing agents, also called reinforcing fibers or fillers, may be added to the polymer matrix according to the present invention. Reinforcing agents can be selected from fibrous and particulate reinforcing agents. A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50.

The reinforcing filler may be selected from mineral fillers (such as talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers and wollastonite.

Among fibrous fillers, glass fibers are preferred; they include chopped strand A-, E-, C-, D-, S- and R-glass fibers, as described in chapter 5.2.3, p. 43-48 of Additives for Plastics Handbook, 2nd edition, John Murphy. Preferably, the filler is chosen from fibrous fillers. It is more preferably a reinforcing fiber that is able to withstand the high temperature applications.

The reinforcing agents may be present in the polymer matrix in an amount ranging from 0.1 and 30 wt. %, from 0.5 and 25 wt. %, from 1 and 20 wt. %, or from 1.5 and 15 wt. % based on the total weight of the polymer matrix.

Optional ingredients

The polymeric matrix may further comprise one or several additives, such as lubricants, heat stabilizers, light stabilizers, antioxidants, pigments, processing aids, dyes, fillers, nanofillers or electromagnetic absorbers. Examples of these optional additives are titanium dioxide, zinc oxide, cerium oxide, silica or zinc sulphide, glass fibers, carbon fibers.

The polymeric matrix may further comprise flame retardants such as halogen and halogen free flame retardants.

The additives may be present in the polymer matrix in an amount ranging from 0.1 and 30 wt. %, from 0.5 and 25 wt. %, from 1 and 20 wt. %, or from 1.5 and 15 wt. % based on the total weight of the polymer matrix.

Fiber tow

In accordance with the present invention, the fibers of the fiber tow may be selected from all fibers capable of being used as reinforcement in the manufacture of continuous fiber filaments. Thus, they may notably be glass fibers, quartz fibers, carbon fibers, graphite fibers, silica fibers, metal fibers such as steel fibers, aluminum fibers or boron fibers, ceramic fibers such as silicon carbide or boron carbide fibers, synthetic organic fibers such as aramid fibers, polyethylene fibers, polyester fibers or fibers of poly(p-phenylene benzobisoxazole) (PBO), natural organic fibers such as hemp fibers, linen fibers or silk fibers.

These fibers are in the form of yarns grouping together several thousand elementary filaments measuring, for example, 6 to 10 $\mu$m diameter in the case of carbon fibers. Said fibers tows are also known as "rovings" or "tapes". In some embodiments, the number of elementary filaments in the fiber tow varies between 1,000 (1K) and 50,000 (50K) fibers.

In some embodiments, the fiber tow comprises carbon fiber filaments, aramid fiber filaments, nylon fiber filaments or fiberglass filaments.

In some embodiments, the fiber tow is sized with a thermoplastic resin preferably selected from the group consisting of a poly(aryl ether ketone) (PAEK) and an aromatic polyamideimide (PAI). The fiber tow may also be sized with urethane and/or epoxy resins.

The fiber tow may be present in the continuous fiber filament in an amount ranging from 20 to 80 vol.%, for example ranging from 30 to 70 vol.% or from 40 to 60 vol. %, based on the total volume of continuous fiber filament. Particularly preferred is a continuous fiber filament comprising 50-55 vol.% or 60-65 vol.% of fiber tow, which contributes to flexibility and handling aspects into the product for printing.

In some embodiments, the continuous fiber filament prepared according to the process of the present invention may comprise

- a polymeric matrix comprising a poly(aryl ether ketone) (PAEK) polymer or copolymer, and
- one fiber tow, which is embedded into the polymer matrix.

In some specific embodiments, the fiber filament may for example comprise:

- from 20 to 80 wt.% of polymeric matrix, for example between 30 to 70 wt.%, from 40 to 60 wt.%, from 50 to 55 wt.% or from 60 to 65 wt.% of polymeric matrix, and
- from 20 to 80 wt.% of fiber tow, for example between 30 to 70 wt.%, from 40 to 60 wt.%, from 35 to 40 wt.% or from 45 to 50 wt.% of fiber tow, based on the total weight of the fiber filament.

In some other specific embodiments, the fiber filament may for example comprise:

- from 20 to 80 wt.% of polymeric matrix consisting in one PAEK polymer or copolymer, for example between 30 to 70 wt.%, from 40 to 60 wt.%, from 50 to 55 wt.% or from 60 to 65 wt.% of polymeric matrix, and
- from 20 to 80 wt.% of carbon fiber tow, for example between 30 to 70 wt.%, from 40 to 60 wt.%, from 35 to 40 wt.% or from 45 to 50 wt.%, based on the total weight of the fiber filament.

Step a) of the process on the present invention consists of spreading the tow before it enters the impregnation bath. The spreading may for example be performed using spreading bars which can be metal rods such as hard chrome plated with matte finish, and of between 6s-13s surface roughness. Such bars may for example be purchased from Izumi international, Inc.. Tows may be spread to at least a width of 4.0 mm prior to entering the impregnation medium according to step b), for example at least 5.0 mm, at least 6.0 mm, at least 7.0 mm or even at least 10.0 mm. In some embodiments, 1K tows are spread to at least a width of 4.0 mm prior to entering the impregnation medium according to step b). In some other embodiments, 3K tows are spread to at least a width of 8.0 mm prior to entering the impregnation medium, for example at least 10.0 mm, at least 11.0 mm or at least 12.0 mm.

Step b) of the process on the present invention, i.e. the impregnation of the fiber tow, may be carried out by circulation and guiding of the tow in a recipient of the tub or tank type, filled beforehand with the impregnation medium liquid, preferably under agitation, so that the medium is maintained in an homogenous state.

After the step of immersing the fiber tow in the impregnation medium, the process may comprise a step of drying the impregnated fiber tow, as a preliminary step to step c) consisting in heating the fiber tow to a temperature above the melting temperature of the polymer.

The process also comprises a step d) consisting in calendering the fiber tow thereby coated with the melted polymer using at least one die of cylindrical geometry.

The present invention also relates to a continuous fiber filament, obtainable by the process described herein, wherein the filament is such that it has a cylindrical geometry, with an average diameter varying from 300 μm and 1,500 μm, as measured by microscopy on the cross-section of at least 50 filament specimens, for example an average diameter varying from 400 μm and 1,300 μm, or from 500 μm and 1,000 μm.

The continuous fiber filament obtainable from the process of the present invention exhibits an improved circularity. Additionally, the tow individual fibers are well distributed across the filament in the polymer matrix. It is believed that these attributes result from the combination of the preparation process and materials involved, notably the identification by the inventors of a class of surfactants well-suited for the polymeric material of the matrix component, comprising PAEK (co)polymers, as well as the identification of a specific polymer particles size (notably d50) to be employed in the impregnation liquid medium to coat the fiber tow.

The continuous fiber filament of the present invention is notably characterized in that it has a circularity of at least 0.70, preferably at least 0.72, more preferably at least 0.74, as measured by microscopy on the cross-section of at least 50 filament specimens according to equation (1):

$$Circularity = 4\pi \times \frac{Area}{(Perimeter)^2} \quad (1)$$

in which:

- "Area" is the area of the diameter cross-section ($\mu m^2$), and
- "Perimeter" is the length of the outside boundary of the filament cross-section (μm).

The continuous fiber filament of the present invention is also characterized in that it has an average fiber content varying between 20 % and 60 % fibers/2,025 $\mu m^2$ and a standard deviation of less than 12 % fibers/2,025 $\mu m^2$, as measured by microscopy on a cross-section filament slice of at least 50 filament squares of 2,025 $\mu m^2$. In some embodiments, the average fiber content varying between 20 % and 60 % fibers/2,025 $\mu m^2$ is between 22 and 58 %, between 24 and 56 % or between 26 and 54 %. In some embodiments, the standard deviation is less than 11.5 %, less than 11.0 % or less than 10.5 % fibers/2,025 $\mu m^2$.

In some embodiments, the minimum fiber content is at least 4 % fibers/2,025 $\mu m^2$, preferably at least 4.5 % fibers/2,025 $\mu m^{2,}$ , as measured by microscopy on a cross-section filament slice of at least 50 filament squares of 2,025 $\mu m^2$. In some embodiments, the maximum fiber content is less than 99 vol.% fibers/2,025 $\mu m^2$, preferably less than 95 vol.% fibers/2,025 $\mu m^2$, as measured by microscopy on a cross-section filament slice of at least 50 filament squares of 2,025 $\mu m^2$.

The present invention also relates to the use of the continuous fiber filament of the present invention for the manufacture of three-dimensional objects using an extrusion-based additive manufacturing system.

Finally, the present invention also relates to a method of making a three-dimensional (3D) object, comprising extruding the continuous fiber filament of the present invention to print layers of the 3D object. This step may for example occurs when printing or depositing strips or layers of part material. The method of making 3D objects using an extrusion-based additive manufacturing system is notably also known as fused filament fabrication technique (FFF). FFF 3D printers are, for example, commercially available from Indmatech, from Hyrel, from Roboze or from Stratasys, Inc. (under the trade name Fortus®). CCF printers are, for example, commercially available from Markforged, Desktop Metal, Moi composites.

## Examples

### Raw Materials

**KetaSpire® PEEK KT 880 UFP, KT 820 UFP, KT 890** and **KT 890 UFP,** commercially available from Solvay Specialty Polymers USA, LLC **Igepal® CA630** (No. CAS 9002-93-1), octylphenoxy poly(ethyleneoxy) ethanol (M= 603g/mol) commercially available from Sigma-Aldrich

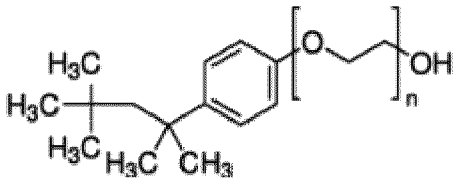

**Thornel® 1K T300 NT CF** and **3K T650 NT CF,** commercially available from Solvay

### Filament characterization

Diameter, particle size distribution (PSD)

The PSD (volume distribution) was determined by an average of 3 runs using laser scattering Microtrac S3500 analyzer in wet mode (128 channels, between 0.0215 and 1408 $\mu$m). The solvent was isopropanol with a refractive index of 1.38 and the particles were assumed to have a refractive index of 1.59. The ultrasonic mode was enabled (25 W/60 seconds) and the flow was set at 55%

In order to characterize the filaments in terms of circularity and fiber distribution, the filament specimens were embedded into an epoxy resin Epofix® from EmsDiasum. The resin was cured at room temperature for at least 24 hours before being polished with a diamond suspension. Polished specimens were examined using a microscope Keyence VH-Z100R.

Circularity

The circularity was measured by microscopy on the cross-section of at least 50 filament specimens according to equation (1):

$$Circularity = 4\pi \times \frac{Area}{(Perimeter)^2} \quad (1)$$

in which:

- "Area" is the area of the diameter cross-section ($\mu m^2$), and

- "Perimeter" is the length of the outside boundary of the filament cross-section (μm).

Fiber distribution

The average fiber content and the standard deviation were measured by microscopy on the cross-section of at least 50 filament squares. More precisely, Imaged software was used in processing the filament morphology by analyzing a cross-sectional filament slice, which is divided into squares of 45 μ m x 45 μ m (row x column). Fiber content is expressed in area percentage (%), as it is analyzed on the basis of images of filament cross-sections, and calculated for at least 50 squares of a cross-sectional filament slice. The area percentage is a good representation of the volume percentage (vol.%) because the fiber filament is continuous according to the present application. For each square, there are dark spots representing fibers, and light areas representing polymer matrix. The software calculates the area of dark spots. For example, a square having a fiber content of 25 % means that for this square the fiber content represents 25 %. The average fiber content is then calculated on the analysis of at least 50 filament squares.

The standard deviation of the fiber content is generated to define the fiber distribution uniformity. The smaller the standard deviation is, the more uniform the fiber distribution is across the cross section of filament. A lower standard deviation represents a filament with fewer resin rich and fewer fiber rich areas.

**Filament manufacturing process**

Composite filaments were made using a fiber line of wet impregnation. According to this process, spreading bars may be used to convert the round carbon fiber tow into a ribbon before it enters the slurry suspension (spreading - step a)). The impregnation container is filled with an aqueous polymer slurry, which is maintained under agitation to ensure a homogenous mixing during the experiments. The carbon fiber tow comes out of the slurry suspension coated with polymer powder. It is then guided into oven units by a couple of rollers. Several (e.g. three) ovens are used to dry the solvent and to melt the polymer powder above its melting temperature (Tm). A heated die of cylindrical geometry (a die of 3 mm total length, 1.5 mm die channel length, and 0.4 mm channel diameter was used for 1K examples; a 0.6 mm channel diameter was used for 3K examples) with a funnel-like opening located right after the melting ovens, was used to control the diameter of the filament and is chosen accordingly. Finally the filament is wound up on a spool.

Preparation process of the medium

The surfactant is added into the water firstly and mixed together using a magnetic stir bar powdered by electric or compression air. The mixture is stirred until the surfactant is well blended. Then the polymer powders are added gradually into the aqueous bath. The stirring continues for at least one hour after all the polymer powders are eventually incorporated and a homogenous solution is obtained.

**Size of the polymer particles**

Two distinct polymer particle size distributions were used to prepare filaments according to the manufacturing process described above. The slurry suspension comprised 1wt.% of Igepal® CA360 and 21 wt.% of PEEK polymer powder, based on the total weight of the impregnation medium. The 3K tows were spread before entering the impregnation bath. The polymer-coated tows were then heated in the ovens at a temperature of 490° C.

Table a

| | **Comparative Powder KT 890** | **Inventive Powder KT 890 UFP** |
|---|---|---|
| Tm (° C) | 345 | 345 |
| d10 (μ m) | 31.5 | 7.6 |
| d50 (μ m) | 86.9 | 10.9 |
| d90 (μ m) | 162.9 | 16.6 |
| | Filament characterization | |
| Diameter (μ m) | 540 | 419 |
| Circularity | 0.67 | 0.97 |
| Fiber distribution: | | |

(continued)

| | Filament characterization | |
|---|---|---|
| a) average fiber % /square | 27.6 | 27.8 |
| b) standard deviation deviation % /square | 16.6 | 10.0 |

Figures 1 and 2 show the fiber distribution on the cross-sections of the filament obtained through the same process however using slurry comprising PEEK polymer powders having distinct d50, more precisely a PEEK polymer powder having a d50 higher than 20 μm (Figure 2-comparative) or a PEEK polymer powder having a d50 of 10.9 μm (Figure 1 - inventive). The fiber distribution on the filament shown on Figure 2 is not uniform, with stacks of fibers at the periphery of the filaments and area with no fibers at all. The fiber distribution of the filament shown on Figure 1 is uniform and well-dispersed over the whole area of the filament.

**Study of the filament circularity**

All examples in this section were generated using KetaSpire ® KT880UFP (D50=11.9 μm) and Igepal® CA360 with weight percentages relative to total impregnation medium concentration. The tow fiber used was Thornel® continuous carbon fiber and was spread or left unchanged as indicated in Table b below.

All the filaments of examples 1-5 were manufactured according to the same process, except that no die was used to calender the filaments of examples 2, 3 and 4. The results are shown in Table b.

Table b

| | E1 (inv) | CE2 (comp) | CE3 (comp) | CE4 (comp) | E5 (inv) |
|---|---|---|---|---|---|
| Slurry Polymer Concentration (wt. %) | 15 | 21 | 15 | 15 | 15 |
| Temperature of the oven (°C) | 425 | 450 | 430 | 425 | 425 |
| Thornel® Carbon Fiber | 3K T650 NT | 1K T300 NT | 3K T650 NT | 3K T650 NT | 3K T650 NT |
| Spreading used | Yes | No | Yes | Yes | Yes |
| Die | 2 | No | No | No | 1 |
| Area (μ$m^2$) | 207,680 | 163,090 | 346,952 | 283,058 | 203,534 |
| Circularity | 0.95 | 0.25 | 0.59 | 0.55 | 0.72 |

These results show that calendering the filaments with at least one die is necessary in order to obtain filaments with an improved circularity. This is successfully achieved in examples E1 and E5 where one or two dies were utilized. Without proper calendering (no die used), the process could not achieve sufficient circularity, as shown for comparatives examples 2, 3 and 4.

**Study of the filament fiber distribution**

Comparative examples 6 in this section was generated using KetaSpire ® KT880UFP (D50=11.9 μm) and Igepal® CA360 with weight percentages relative to total slurry concentration. The fiber used was Thornel® continuous carbon fiber and was spread or left unchanged as indicated in Table c below.

The filaments of example 6 was manufactured according to the same process than the one of example 1, except that the tow was not spread before entering the impregnation bath. The results are shown in Table c.

Table c

| | E1 (inv) | CE2 (comp) | CE6 (comp) |
|---|---|---|---|
| Polymer oncentration (wt. %) | 15 | 21 | 21 |
| Temperature of the oven (°C) | 425 | 450 | 490 |
| Thornel® Carbon Fiber | 3K T650 NT | 1K T300 NT | 1K T650 NT |
| Spreading used | Yes | No | No |

(continued)

| | E1 (inv) | CE2 (comp) | CE6 (comp) |
|---|---|---|---|
| Die | Yes (2) | No | Yes (1) |
| Average fiber % /square | 24.7 | 25.8 | 33.0 |
| Standard deviation % /square | 5.7 | 16.1 | 13.1 |

These results show that it is necessary for the fiber tow to be spread before entering the impregnation bath. This is successfully achieved in examples E1 where spreading was utilized. Without spreading, the process could not achieve uniform fiber distribution, as shown for comparatives examples 2 and 6.

**Impact of the circularity on the mechanical performance**

Molded samples were made so as to investigate the effects of the filament circularity and fiber distribution uniformity onto the mechanical performance of the molded samples. Molding temperature was set at 371.1 ° C (700° F) and the molding time was 30 min for all the experiments. The molding pressures used were 448-689 kPa (65-100 psi). Molded samples were submitted to Short-Beam-Stress (SBS) test, as described in "Interlaminar shear strength of continuous carbon fiber reinforced thermoplastic composites manufactured by 3D printing" Conference paper from Jan 2017 from 24th ABCM International Congress of Mechanical Engineering - Dutra *et al.*. The test applies both tensile and compression forces onto the specimen and can measure the interlaminar shear characteristics. The test was performed using Instron 5569, following ASTM2344. Test speed was 1.0 mm/min.

Molded samples A and B were made using three layers of filaments with circularity of 0.84 and a fiber distribution of 5.7 % / square standard deviation. The filament is a 60 wt.% resin content filament. Sample A and sample B were produced using equivalent weights of filament but were molded under different pressure. Sample A has thickness of 1.23mm, which is thinner compared with molded sample B thickness of 1.28mm.

Molded sample C and D were made using three layers of filaments with a circularity of 0.59.

Molded sample E was made using three layers of tow filaments with average circularity of 0.72.

Results

Table d

| Molded sample | | A | B | C | D | E |
|---|---|---|---|---|---|---|
| Filaments used | Circularity | Good | Good | Poor | Poor | Good |
| | Fiber distribution | Good | Good | Good | Good | Poor |
| | Resin content (wt. %) | 60 | 60 | 60 | 60 | Overall 60% (Mixture of 40 wt.% and 80 wt.%) |
| Molding pressure (kPa) | | 689 | 448 | 448 | 448 +spacer | 448 |
| Thickness of molded sample (mm) | | 1.23 | 1.28 | 1.10 | 1.35 | 1.30 |
| SBS strength (MPa) | | 80.4 | 80.5 | nd | 71.1 | 72.9 |
| Standard deviation | | 1.33 | 1.89 | nd | 2.37 | 3.1 |
| *nd= non detectable | | | | | | |

The morphology of molded sample A and B is quite similar, especially fiber distribution is uniform. This means that the dimension and morphology was not impacted by the pressure change. The result shows that the filament used for samples A and B can lead to a printed part of good dimension control even under various print process conditions.

The boundary lines in sample C between individual filaments is bigger compared with molded sample B (results not shown). Although sample B and C were molded under the same conditions, the thickness of sample C is only 1.10 mm, significantly thinner than sample B. This is because the poor circularity leads to a poor alignment of the filament straws. When a 3D printer extrudes filaments onto the printing bed, poor circularity delivers parts with inconsistent raster width and higher chance of void defect.

Molded part D has similar thickness as the molded sample B due to the use of a spacer so as to keep the sample thickness to be around 1.3 mm. Bigger boundary areas are observed. In most of FFF process including CCF filament printing, the build platform moves down in the z-axis by one layer thickness/path height programmed in the printing software after a layer is accomplished. Therefore, good control of extrudate's thickness after the consolidation is critical in the good quality of printed part. The result of molded part D also shows that filaments of poor circularity lead to a printed part of poor dimension control and defects which jeopardize the mechanical performance of the printed part (SBS strength significantly lower than the one of molded part B).

Molded sample A and molded sample B have the same high SBS strength with small deviation, due to the filaments of good quality (good circularity and uniform distribution) and resulting good consolidation. The SBS strength decreased in strength and increased in variability (shown by an increase in standard deviation) for samples C, D, and E. Sample C was so weak a strength could not be report as the filaments poorly consolidated due to the poor circularity. The SBS strength of molded sample D is about 11% lower due to the boundary areas between the filaments caused by poor filament circularity. The SBS strength of molded sample E is about 9% lower compared with the first two samples. There are no boundary lines or areas inside the molded sample E (results not shown). The sample has the same overall fiber and resin composition but there is greater localized variation across sample E. The poor fiber distribution makes the resin rich area, where the carbon fiber content is relatively lower, more vulnerable for the fail to start under the test's loading. This also explains why the standard deviation of its SBS strength is higher.

## Claims

**1.** A process for preparing a continuous fiber filament comprising:

- a polymeric matrix comprising a polymeric component, optionally reinforcing agents, and optionally at least one additive selected from the group consisting of colorants, lubricants, plasticizers, flame retardants, nucleating agents, flow enhancers and stabilizers, wherein the polymeric component comprises at least one poly(aryl ether ketone) (PAEK) polymer or copolymer, and
- at least one fiber tow, which is embedded into the polymer matrix,

wherein the process comprises the steps of:

a) spreading the fiber tow,
b) impregnating the fiber tow in a liquid medium, comprising the polymeric component in the shape of polymer powder particles, at least an aqueous solvent and from 0.01 to 3 wt.%, based on the total weight of the liquid medium, of at least one alkylphenoxy poly(ethyleneoxy) ethanol surfactant, wherein the polymer powder particles have a d50 varying between 1 and 20 $\mu$m, as measured as measured by laser scattering in isopropanol,
c) heating the impregnated fiber above the melting temperature of the polymeric component, and
d) calendering the filament using at least one die of cylindrical geometry.

**2.** The process of claim 1, wherein:

- the aqueous solvent is water, and/or
- the surfactant is an octylphenoxy poly(ethyleneoxy) ethanol surfactant.

**3.** The process of claim 1 or 2, wherein the polymer matrix comprises at least 50 wt.% of at least one poly(ether ether ketone) (PEEK) polymer, based on the total weight of the polymer matrix.

**4.** The process of claim 3, wherein at least 90 mol.% of the recurring units in the PEEK are recurring units ($R_{PEEK}$) of formulas (J-A), (J'-A) and/or (J"-A), the mol. % being based on the total number of moles of recurring units in the polymer;

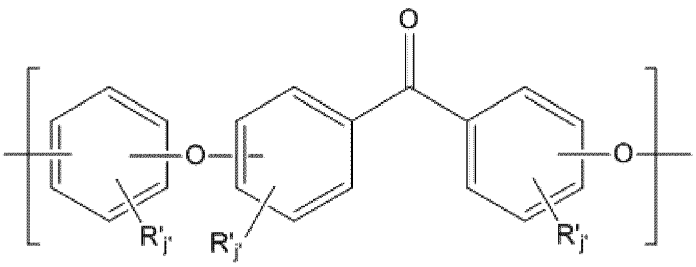

(J-A)

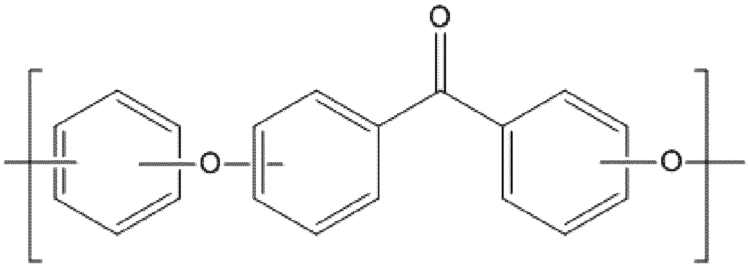

(J'-A)

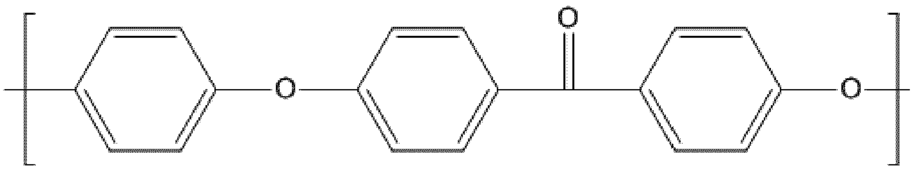

(J''-A)

where

R', at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and

J', for each R', is independently zero or an integer ranging from 1 to 4.

**5.** The process of claim 3, wherein all the recurring units in the PEEK are recurring units ($R_{PEEK}$) of formula (J"-A):

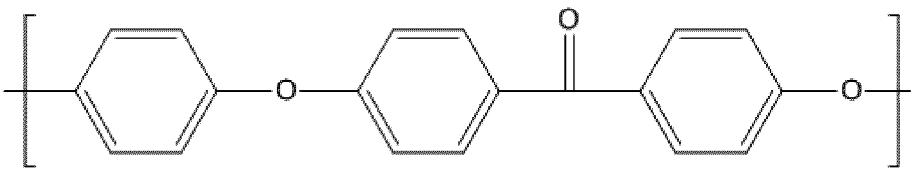

(J''-A)

**6.** The process of any one of the preceding claims, wherein the fiber tow is present in the continuous fiber filament in an amount ranging from 20 to 80 vol.%, based on the total volume of continuous fiber filament.

**7.** The process of any one of the preceding claims, wherein the polymer powder particles have a d90 of less than 30 $\mu$m, as measured as measured by laser scattering in isopropanol.

**8.** The process of any one of the preceding claims, wherein the PAEK (co)polymer powder particles have a d10-value higher than 0.5 $\mu$m, as measured by laser scattering in isopropanol.

**9.** The process of any one of the preceding claims, wherein the PAEK (co)polymer powder particles have a d99-value less than 50 micrometers as measured by laser scattering in isopropanol.

**10.** The process of any one of the preceding claims, wherein the fiber tow comprises carbon fiber filaments, aramid fiber filaments, nylon fiber filaments or fiberglass filaments.

**11.** The process of any one of the preceding claims, wherein the number of fiber filaments in the fiber tow varies between 1,000 (1K) and 50,000 (50K) fibers

**12.** The process of any one of the preceding claims, wherein the fiber tow is sized with a thermoplastic resin preferably selected from the group consisting of a poly(aryl ether ketone) (PAEK) and an aromatic polyamideimide (PAI).

**13.** The process of any one of claims 1-3 and 6-12, wherein the polymer matrix comprises at least one poly(ether ether ketone) (PEEK) which comprises at least 50 mol.% of recurring units ($R_{PEEK}$) of formula (J-A), based on the total number of moles in the polymer:

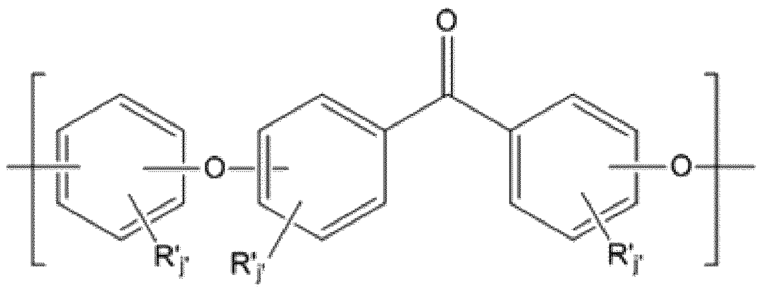

(J-A)

where

- R', at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- J', for each R', is independently zero or an integer ranging from 1 to 4.

**14.** The process of any one of the preceding claims, wherein the step of heating the impregnated fiber is carried out at a temperature of at least 320°C.

**15.** A continuous fiber filament, obtainable by the process of any one of claims 1-14, wherein the filament is such that it has a cylindrical geometry, with:

- an average diameter varying from 300 μm and 1,500 μm, as measured by microscopy on the cross-section of at least 50 filament specimens,
- a diameter having a circularity of at least 0.70, preferably at least 0.72, more preferably at least 0.74, as measured by microscopy on the cross-section of at least 50 filament specimens according to equation (1):

$$Circularity = 4\pi \times \frac{Area}{(Perimeter)^2} \quad (1)$$

in which:

- "Area" is the area of the diameter cross-section ($\mu m^2$), and
- "Perimeter" is the length of the outside boundary of the filament cross-section (μm),

- an average fiber content varying between 20% and 60 % fibers/2,025 $\mu m^2$ and a standard deviation of less than 12 % fibers/2,025 $\mu m^2$, as measured by microscopy on a cross-section filament slice of at least 50 filament squares of 2,025 $\mu m^2$.

**16.** The filament of claim 15, wherein the minimum fiber content is at least 4 % fibers/2,025 $\mu m^2$, preferably at least 4.5 % fibers/2,025 $\mu m^2$.

**17.** The filament of claim 15 or 16, wherein the maximum fiber content is less than 100 % fibers/2,025 $\mu m^2$, preferably less than 95 % fibers/2,025 $\mu m^2$.

**18.** Use of the continuous fiber filament of any of claims 15-17 for the manufacture of three-dimensional objects using an extrusion-based additive manufacturing system.

**19.** A method of making a three-dimensional (3D) object, comprising extruding the continuous fiber filament of any of claims 15-17 to print layers of the 3D object.

**Patentansprüche**

**1.** Verfahren zur Herstellung eines Endlosfaserfilaments, umfassend:

- eine polymere Matrix, umfassend eine polymere Komponente, gegebenenfalls Verstärkungsmittel und gegebenenfalls mindestens ein Additiv ausgewählt aus der Gruppe bestehend aus Färbungsmitteln, Schmiermitteln, Plastifizierungsmitteln, Flammhemmern, Nukleierungsmitteln, Fließverbesserern und Stabilisatoren, wobei die polymere Komponente mindestens ein Poly(aryletherketon) (PAEK)-Polymer oder -Copolymer umfasst, und
- mindestens ein Faserkabel, das in die Polymermatrix eingebettet ist,

wobei das Verfahren die Schritte umfasst:

a) Aufspreizen des Faserkabels,
b) Imprägnieren des Faserkabels in einem flüssigen Medium, umfassend die polymere Komponente in Form von Polymerpulverpartikeln, mindestens ein wässriges Lösungsmittel und 0,01 bis 3 Gew.%, bezogen auf das Gesamtgewicht des flüssigen Mediums, von mindestens einem Alkylphenoxypoly(ethylenoxy)ethanol-Tensid, wobei die Polymerpulverpartikel einen d50-Wert haben, der zwischen 1 und 20 $\mu m$ variiert, gemessen wie durch Laserstreuung in Isopropanol gemessen,
c) Erwärmen der imprägnierten Faser auf über die Schmelztemperatur der polymeren Komponente, und
d) Kalandrieren des Filaments unter Verwendung von mindestens einer Düse mit zylindrischer Geometrie.

**2.** Verfahren nach Anspruch 1, wobei:

- das wässrige Lösungsmittel Wasser ist; und/oder
- das Tensid ein Octylphenoxypoly(ethylenoxy)ethanol-Tensid ist.

**3.** Verfahren nach Anspruch 1 oder 2, wobei die Polymermatrix mindestens 50 Gew.% von mindestens einem Poly(etheretherketon) (PEEK)-Polymer umfasst, bezogen auf das Gesamtgewicht der Polymermatrix.

**4.** Verfahren nach Anspruch 3, wobei mindestens 90 Mol.% der sich wiederholenden Einheiten in dem PEEK sich wiederholende Einheiten ($R_{PEEK}$) der Formeln (J-A), (J'-A) und/oder (J"-A) sind, wobei die Mol.% sich auf die Gesamtanzahl der Mole der sich wiederholenden Einheiten in dem Polymer beziehen;

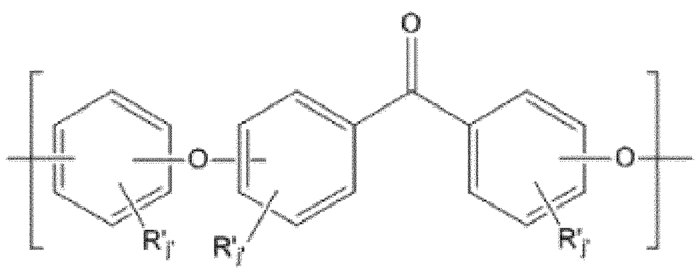
(J-A)

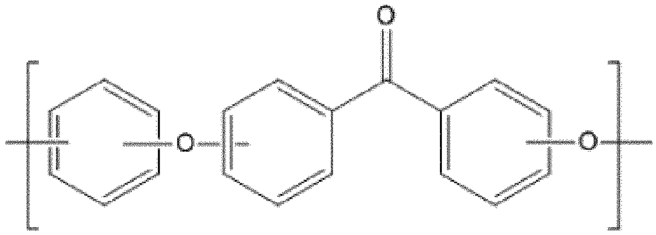

(J'-A)

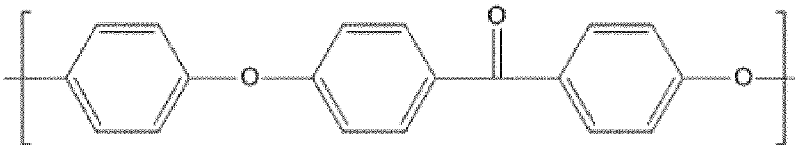

(J"-A)

wobei

R' an jeder Stelle unabhängig ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium; und
J' für jedes R' unabhängig Null oder eine ganze Zahl im Bereich von 1 bis 4 ist.

5. Verfahren nach Anspruch 3, wobei alle der sich wiederholenden Einheiten in dem PEEK sich wiederholende Einheiten ($R_{PEEK}$) mit der Formel (J"-A) sind:

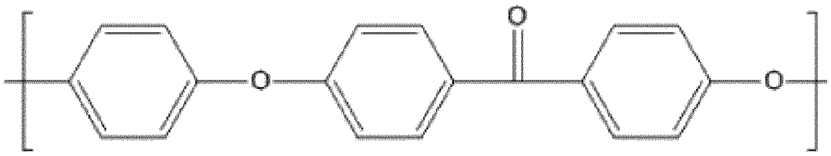

(J"-A)

6. Verfahren nach einem der vorhergehenden Ansprüche, wobei das Faserkabel in dem Endlosfaserfilament in einer Menge im Bereich von 20 bis 80 Vol.% vorhanden ist, bezogen auf das Gesamtvolumen des Endlosfaserfilaments.

7. Verfahren nach einem der vorhergehenden Ansprüche, wobei die Polymerpulverpartikel einen d90-Wert kleiner als 30 $\mu$m haben, gemessen wie durch Laserstreuung in Isopropanol gemessen.

8. Verfahren nach einem der vorhergehenden Ansprüche, wobei die PAEK-(Co)polymerpulverpartikel einen d10-Wert größer als 0,5 $\mu$m haben, wie durch Laserstreuung in Isopropanol gemessen.

9. Verfahren nach einem der vorhergehenden Ansprüche, wobei die PAEK-(Co)polymerpulverpartikel einen d99-Wert kleiner als 50 Mikrometer haben, wie durch Laserstreuung in Isopropanol gemessen.

10. Verfahren nach einem der vorhergehenden Ansprüche, wobei das Faserkabel Kohlefaserfilamente, Aramidfaserfilamente, Nylonfaserfilamente oder Fiberglasfilamente umfasst.

11. Verfahren nach einem der vorhergehenden Ansprüche, wobei die Anzahl der Faserfilamente in den Faserkabeln zwischen 1000 (1K) und 50.000 (50K) Fasern variiert.

12. Verfahren nach einem der vorhergehenden Ansprüche, wobei das Faserkabel mit einer Schlichte aus thermoplastischem Harz überzogen ist, die vorzugsweise ausgewählt ist aus der Gruppe bestehend aus einem Poly(aryletherketon) (PAEK) und einem aromatischen Polyamidimid (PAI).

**13.** Verfahren nach einem der Ansprüche 1 bis 3 und 6 bis 12, wobei die Polymermatrix mindestens ein Poly-(etheretherketon) (PEEK) umfasst, das mindestens 50 Mol.% sich wiederholende Einheiten ($R_{PEEK}$) der Formel (JA) umfasst, bezogen auf die Gesamtanzahl der Mole in dem Polymer:

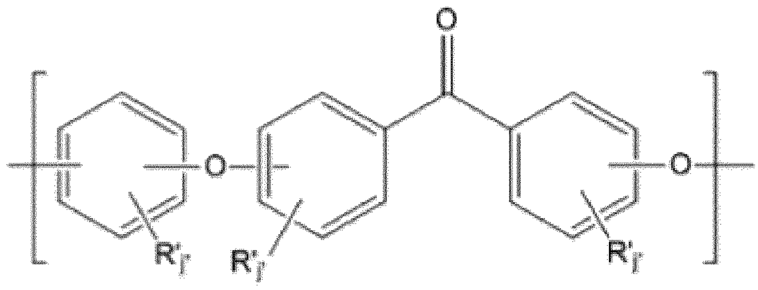

(J-A)

wobei

- R' an jeder Stelle unabhängig ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium; und
- J' für jedes R' unabhängig Null oder eine ganze Zahl im Bereich von 1 bis 4 ist.

**14.** Verfahren nach einem der vorhergehenden Ansprüche, wobei der Schritt des Erwärmens der imprägnierten Faser bei einer Temperatur von mindestens 320 °C durchgeführt wird.

**15.** Endlosfaserfilament, das nach dem Verfahren gemäß einem der Ansprüche 1 bis 14 erhältlich ist, wobei das Filament so ist, dass es eine zylindrische Geometrie hat, mit:

- einem durchschnittlichen Durchmesser, der von 300 µm bis 1500 µm variiert, gemessen mittels Mikroskopie an dem Querschnitt von mindestens 50 Filamentprobestücken,
- einem Durchmesser mit einer Zirkularität von mindestens 0,70, vorzugsweise mindestens 0,72, bevorzugter mindestens 0,74, gemessen mittels Mikroskopie an dem Querschnitt von mindestens 50 Filamentprobestücken gemäß Gleichung (1):

$$\text{Zirkularität} = \frac{4\pi \times \text{Flächeninhalt}}{(\text{Umfang})^2} \qquad (1)$$

worin:

- "Flächeninhalt" der Flächeninhalt des Durchmesserquerschnitts ist ($\mu m^2$), und
- "Umfang" die Länge der Außenseitengrenze des Filamentquerschnitts ist (pm),

- einem durchschnittlichen Fasergehalt, der zwischen 20 % und 60 % Fasern/2,025 $\mu m^2$ variiert, und einer Standardabweichung kleiner als 12 % Fasern/2,025 $\mu m^2$, gemessen mittels Mikroskopie an einer Querschnittfilamentscheibe aus mindestens 50 Filamentquadraten von 2,025 $\mu m^2$.

**16.** Filament nach Anspruch 15, wobei der Mindestfasergehalt mindestens 4 % Fasern/2,025 $\mu m^2$, vorzugsweise mindestens 4,5 % Fasern/2,025 $\mu m^2$ beträgt.

**17.** Filament nach Anspruch 15 oder 16, wobei der Maximalfasergehalt weniger als 100 % Fasern/2,025 $\mu m^2$, vorzugsweise weniger als 95 % Fasern/2,025 $\mu m^2$ beträgt.

**18.** Verwendung des Endlosfaserfilaments nach einem der Ansprüche 15 bis 17 zur Fertigung dreidimensionaler Objekte unter Verwendung eines additiven Fertigungssystems auf Extrusionsbasis.

**19.** Verfahren zur Herstellung eines dreidimensionalen (3D) Objekts, umfassend Extrudieren des Endlosfaserfilaments

nach einem der Ansprüche 15 bis 17 zum Drucken von Schichten des 3D-Objekts.

**Revendications**

1. Procédé de préparation d'un filament à fibre continue comprenant :

- une matrice polymérique comprenant un composant polymérique, éventuellement des agents de renforcement, et éventuellement au moins un additif choisi dans le groupe constitué par des matières colorantes, des lubrifiants, des plastifiants, des agents ignifugeants, des agents de nucléation, des agents d'amélioration de l'écoulement et des stabilisants, le composant polymérique comprenant au moins un polymère ou copolymère poly(aryléthercétone) (PAEK), et
- au moins unun brin de fibres, qui est incorporée dans la matrice de polymère,

le procédé comprenant les étapes de :

a) étalement du brin de fibres,
b) imprégnation du brin de fibres dans un milieu liquide, comprenant le composant polymérique sous la forme de particules de poudre de polymère, au moins un solvant aqueux et de 0,01 à 3 % en poids, sur la base du poids total du milieu liquide, d'au moins un tensioactif de type alkylphénoxy poly(éthylèneoxy) éthanol, les particules de poudre de polymère ayant un d50 variant entre 1 et 20 μm, comme mesuré par diffusion laser dans l'isopropanol,
c) chauffage de la fibre imprégnée au-dessus de la température de fusion du composant polymérique, et
d) calandrage du filament en utilisant au moins une matrice de géométrie cylindrique.

2. Procédé selon la revendication 1,

- le solvant aqueux étant l'eau, et/ou
- le tensioactif étant un tensioactif de type octylphénoxy poly(éthylèneoxy) éthanol.

3. Procédé selon la revendication 1 ou 2, la matrice de polymère comprenant au moins 50 % en poids d'au moins un polymère poly(étheréthercétone) (PEEK), sur la base du poids total de la matrice de polymère.

4. Procédé selon la revendication 3, au moins 90 % en moles des motifs répétitifs dans le PEEK étant des motifs répétitifs ($R_{PEEK}$) de formules (J-A), (J'-A) et/ou (J"-A), les % en moles étant basés sur le nombre total de moles de motifs répétitifs dans le polymère ;

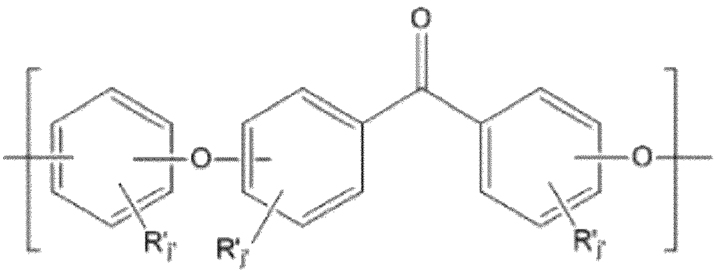

(J-A)

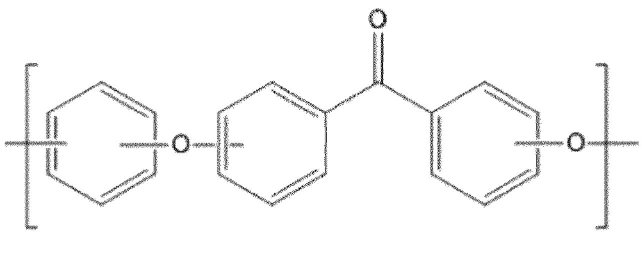

(J'-A)

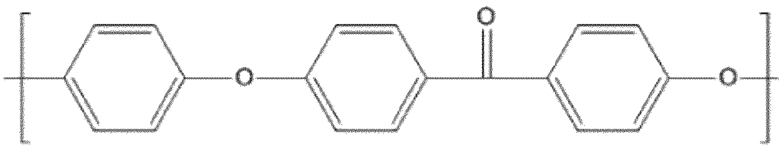

(J''-A)

où

R', au niveau de chaque emplacement, est indépendamment choisi dans le groupe constitué par halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ; et

J', pour chaque R', est indépendamment zéro ou un entier dans la plage de 1 à 4.

**5.** Procédé selon la revendication 3, tous les motifs répétitifs dans le PEEK étant des motifs répétitifs ($R_{PEEK}$) de formule (J''-A) :

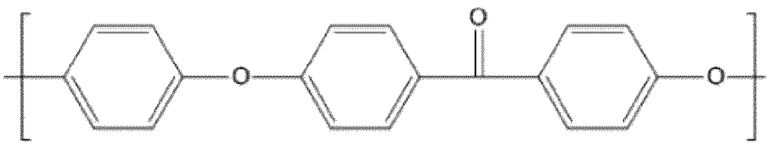

(J''-A) .

**6.** Procédé selon l'une quelconque des revendications précédentes, le brin de fibres étant présent dans le filament à fibre continue en une quantité dans la plage de 20 à 80 % en volume, sur la base du volume total de filament à fibre continue.

**7.** Procédé selon l'une quelconque des revendications précédentes, les particules de poudre de polymère ayant un d90 inférieur à 30 $\mu$m, comme mesuré par diffusion laser dans l'isopropanol.

**8.** Procédé selon l'une quelconque des revendications précédentes, les particules de poudre de (co)polymère PAEK ayant une valeur de d10 supérieure à 0,5 $\mu$m, comme mesuré par diffusion laser dans l'isopropanol.

**9.** Procédé selon l'une quelconque des revendications précédentes, les particules de poudre de (co)polymère PAEK ayant une valeur de d99 inférieure à 50 micromètres comme mesuré par diffusion laser dans l'isopropanol.

**10.** Procédé selon l'une quelconque des revendications précédentes, le brin de fibres comprenant des filaments de fibres de carbone, des filaments de fibres d'aramide, des filaments de fibres de nylon ou des filaments de fibres de verre.

**11.** Procédé selon l'une quelconque des revendications précédentes, le nombre de filaments de fibres dans le brin de fibres variant entre 1 000 (1K) et 50 000 (50K) fibres.

**12.** Procédé selon l'une quelconque des revendications précédentes, le brin de fibres étant encollé avec une résine thermoplastique préférablement choisie dans le groupe constitué par une poly(aryléthercétone) (PAEK) et un polyamideimide aromatique (PAI).

**13.** Procédé selon l'une quelconque des revendications 1 à 3 et 6 à 12, la matrice de polymère comprenant au moins un poly(étheréthercétone) (PEEK) qui comprend au moins 50 % en moles de motifs répétitifs ($R_{PEEK}$) de formule (J-A), sur la base du nombre total de moles dans le polymère :

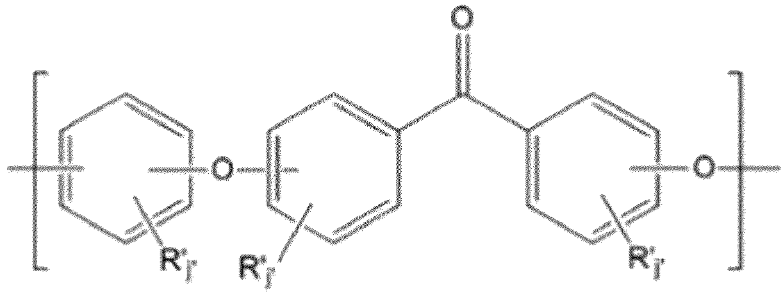

(J-A)

où

- R', au niveau de chaque emplacement, est indépendamment choisi dans le groupe constitué par halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ; et
- j', pour chaque R', est indépendamment zéro ou un entier dans la plage de 1 à 4.

**14.** Procédé selon l'une quelconque des revendications précédentes, l'étape de chauffage de la fibre imprégnée étant mise en oeuvre à une température d'au moins 320 °C.

**15.** Filament à fibre continue, pouvant être obtenu par le procédé selon l'une quelconque des revendications 1 à 14, le filament étant tel qu'il possède une géométrie cylindrique, avec :

- un diamètre moyen variant de 300 μm à 1 500 μm, comme mesuré par microscopie sur la section transversale d'au moins 50 échantillons de filament,
- un diamètre ayant une circularité d'au moins 0,70, préférablement d'au moins 0,72, plus préférablement d'au moins 0,74, comme mesuré par microscopie sur la section transversale d'au moins 50 échantillons de filament selon l'équation (1) :

$$circularité = 4\pi \times (aire / (périmètre)^2) \qquad (1)$$

dans laquelle :

- « aire » est l'aire de la section transversale du diamètre (μ$m^2$), et
- « périmètre » est la longueur de la limite extérieure de la section transversale de filament (pm),

- une teneur moyenne en fibres variant entre 20 % et 60 % de fibres/2,025 μ$m^2$ et un écart type de moins de 12 % de fibres/2,025 μ$m^2$, comme mesurée par microscopie sur une tranche de filament de section transversale d'au moins 50 carrés de filament de 2,025 μ$m^2$.

**16.** Filament selon la revendication 15, la teneur minimale en fibres étant d'au moins 4 % de fibres/2,025 μ$m^2$, préférablement d'au moins 4,5 % de fibres/2,025 μ$m^2$.

**17.** Filament selon la revendication 15 ou 16, la teneur maximale en fibres étant inférieure à 100 % de fibres/2,025 μ$m^2$, préférablement inférieure à 95 % de fibres/2,025 μ$m^2$.

**18.** Utilisation du filament à fibre continue selon l'une quelconque des revendications 15 à 17 pour la fabrication d'objets tridimensionnels en utilisant un système d'impression 3D basée sur l'extrusion.

**19.** Procédé de fabrication d'un objet tridimensionnel (3D), comprenant une extrusion du filament à fibre continue selon l'une quelconque des revendications 15 à 17 pour imprimer des couches de l'objet en 3D.

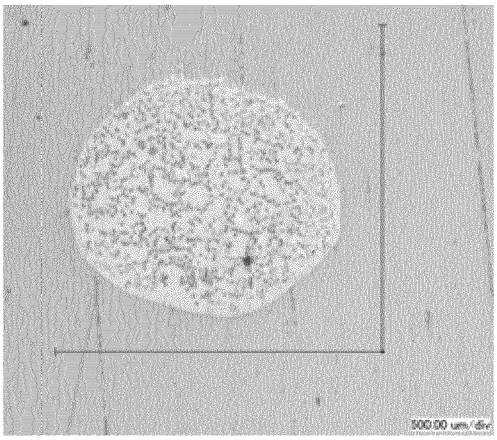


Figure 1

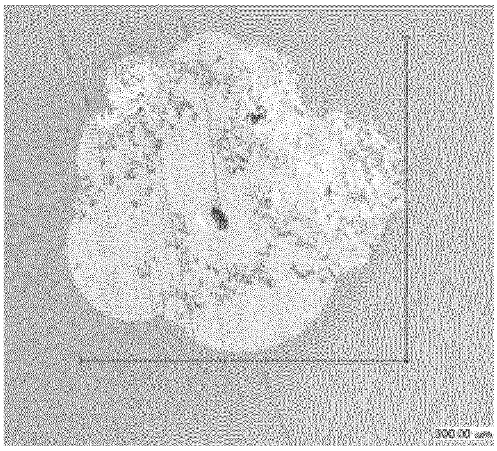


Figure 2

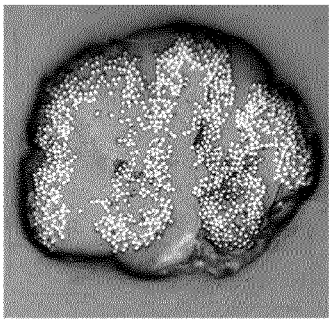

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018185440 A, Arkema
- WO 2019053379 A1, Arkema
- WO 2019042949 D1
- US 2020009785 D2
- US 4894105 A
- US 5395477 A, Sandusky


### Non-patent literature cited in the description


- **JOHN MURPHY.** Additives for Plastics Handbook. 43-48
- *CHEMICAL ABSTRACTS,* 9002-93-1